# EUROPEAN PATENT APPLICATION

(11) **EP 4 442 410 A1**
(43) Date of publication of application: **09.10.2024**
(21) Application number: 22898709.5
(22) Date of filing: 29.11.2022
(51) Int. Cl.: B25J 13/08, B25J 15/08

(54) **CONTROL DEVICE, ROBOT CONTROL SYSTEM, AND ROBOT CONTROL METHOD**

(30) Priority: 29.11.2021 JP 2021193652
(71) Applicant: KYOCERA CORPORATION, Kyoto-shi, Kyoto 612-8501 (JP)
(72) Inventor: ONO, Kazuki, Kyoto-shi, Kyoto 612-8501 (JP); YAMAGISHI, Yuki, Kyoto-shi, Kyoto 612-8501 (JP); ANAN, Naohiro, Kyoto-shi, Kyoto 612-8501 (JP); ISHIDA, Takayuki, Kyoto-shi, Kyoto 612-8501 (JP); MIYAMURA, Hiroaki, Kyoto-shi, Kyoto 612-8501 (JP)
(74) Representative: TBK
(86) International application number: PCT/JP2022/044047
(87) International publication number: WO 2023/095927

(57) **Abstract**

A control apparatus includes a hand controller that controls a hand capable of grasping an object to be grasped and including a plurality of sensors. The hand controller is configured to be able to obtain information regarding grasping force acting on the object to be grasped from the hand or information regarding a moment acting on the object to be grasped in the hand, the information regarding the grasping force and the information regarding the moment being based on outputs of the plurality of sensors. The hand controller estimates, on a basis of the information regarding the grasping force or the information regarding the moment, a grasping state in which the hand is grasping the object to be grasped.

## Description

### CROSS-REFERENCE TO RELATED APPLICATIONS

The present application claims priority to Japanese Patent Application No. 2021-193652 filed in the Japan Patent Office on November, 29, 2021, the entire contents of which are incorporated herein by reference.

### TECHNICAL FIELD

The present disclosure relates to a control apparatus, a robot control system, and a method for controlling a robot.

### BACKGROUND OF INVENTION

A method for controlling a robot capable of, when performing assembly or disassembly with reaction force applied from a workpiece, performing accurate assembly or disassembly while preventing jamming of the workpiece by reducing slippage between a hand and the workpiece is known (e.g., refer to Patent Literature 1).

### CITATION LIST

### PATENT LITERATURE

Patent Literature 1: Japanese Unexamined Patent Application Publication No. 2003-305678

### SUMMARY

In an embodiment of the present disclosure, a control apparatus includes a hand controller that controls a hand. The hand is capable of grasping an object to be grasped and includes a plurality of sensors. The hand controller is configured to be able to obtain information regarding grasping force acting on the object to be grasped from the hand or information regarding a moment acting on the object to be grasped in the hand, the information regarding the grasping force and the information regarding the moment being based on outputs of the plurality of sensors. The hand controller estimates, on a basis of the information regarding the grasping force or the information regarding the moment, a grasping state in which the hand is grasping the object to be grasped.

In an embodiment of the present disclosure, a robot control system includes the control apparatus and a robot including a hand.

In an embodiment of the present disclosure, a method for controlling a robot includes obtaining information regarding grasping force acting on an object to be grasped from a hand or information regarding a moment acting on the object to be grasped in the hand. The method for controlling a robot includes estimating, on a basis of the information regarding the grasping force or the information regarding the moment, a grasping state in which the hand is grasping the object to be grasped.

### BRIEF DESCRIPTION OF THE DRAWINGS

FIG. 1 is a block diagram illustrating a configuration example of a robot control system according to an embodiment.
FIG. 2 is a block diagram illustrating a configuration example of a hand controller and a hand.
FIG. 3 is a schematic diagram illustrating an example of a mode in which the hand grasps an object to be grasped.
FIG. 4 is a side view of FIG. 3.
FIG. 5 is a flowchart illustrating an example of a procedure corresponding to a case of a grasping correction state.
FIG. 6 is a flowchart illustrating an example of a procedure corresponding to a case of an abnormal grasping state.
FIG. 7 is a flowchart illustrating an example of a procedure corresponding to a case of an ungraspable state.

### DESCRIPTION OF EMBODIMENTS

When grasping is controlled on the basis of a coefficient of friction, the grasping might become unstable due to a decrease in the coefficient of friction between a hand and a workpiece caused by time-related deterioration of the hand. When grasping is controlled on the basis of magnitude of force acting on an object to be grasped, the grasping might become unstable due to a rotational moment acting on the object to be grasped. Improvement of stability of grasping by the robot is required.

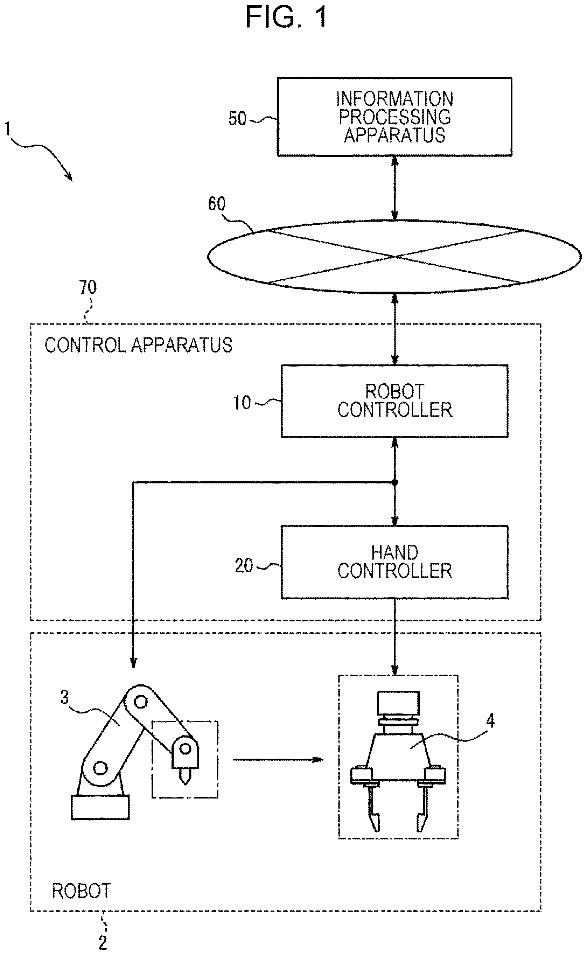

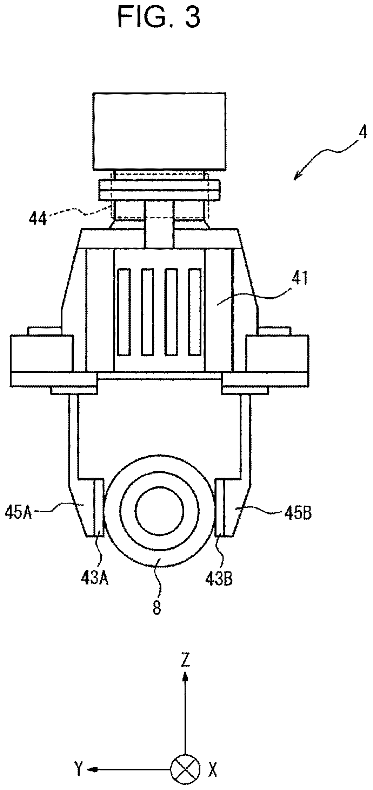

In an embodiment, a robot control system 1 includes a robot 2 and a control apparatus 70. The robot 2 includes an arm 3 and a hand 4 as illustrated in FIG. 1. The arm 3 may include joints and links. The hand 4 is configured to be able to grasp an object 8 to be grasped (refer to FIG. 3). In the present embodiment, the control apparatus 70 includes a robot controller 10 and a hand controller 20. That the control apparatus 70 may include at least the hand controller 20. The robot controller 10 moves the hand 4 to a position of the object 8 to be grasped by operating the arm 3 of the robot 2 on the basis of information for controlling movement of the robot 2. The movement of the hand 4 to the position of the object 8 to be grasped will also be referred to as an approach operation. The robot controller 10 controls the approach operation of the hand 4 to the object 8 to be grasped. The hand controller 20 controls the hand 4 to cause the hand 4 to grasp the object 8 to be grasped.

The robot controller 10 and the hand controller 20 may perform, for example, an operation described hereinafter. The robot controller 10 controls the arm 3 such that the hand 4 moves to a position where the hand 4 can grasp the object 8 to be grasped. After the hand 4 moves to the object 8 to be grasped, the hand controller 20 determines a target position where the hand 4 grasps the object 8 to be grasped, and controls the hand 4 such that the hand 4 grasps the object 8 to be grasped. While the hand 4 is grasping the object 8 to be grasped, the robot controller 10 controls the arm 3 in such a way as to raise the hand 4 to lift the object 8 to be grasped and move the object 8 to be grasped to a target position to which the object 8 to be grasped is to be moved. After the lifted object 8 to be grasped moves to the target position, the hand controller 20 reduces grasping force for the object 8 to be grasped to release the object 8 to be grasped from the hand 4 and put the object 8 to be grasped at the target position.

The robot controller 10 may generate and obtain information for controlling movement of the robot 2. The robot controller 10 may obtain information for controlling movement of the robot 2 from an external apparatus such as an information processing apparatus 50 linked thereto over a network 60 or without the network 60, instead. The hand controller 20 may generate and obtain information for controlling movement of the hand 4. The hand controller 20 may obtain information for controlling movement of the hand 4 from the robot controller 10, instead. The robot controller 10 and the hand controller 20 may be integrated together.

The robot controller 10 may include at least one processor in order to provide control and processing performance for executing various functions. The processor can execute programs for achieving various functions of the robot controller 10. The processor may be achieved as a single integrated circuit. The integrated circuit is also called an IC (integrated circuit). The processor may be achieved as a plurality of integrated circuits and discrete circuits communicably connected to one another, instead. The processor may be achieved on the basis of one of various other known techniques, instead.

The robot controller 10 may include a storage unit. The storage unit may include a magnetic storage medium such as a magnetic disk or a memory such as a semiconductor memory or a magnetic memory. The storage unit stores various pieces of information, programs to be executed by the robot controller 10, and the like. The storage unit may function as a working memory of the robot controller 10. At least a part of the storage unit may be achieved separately from the robot controller 10.

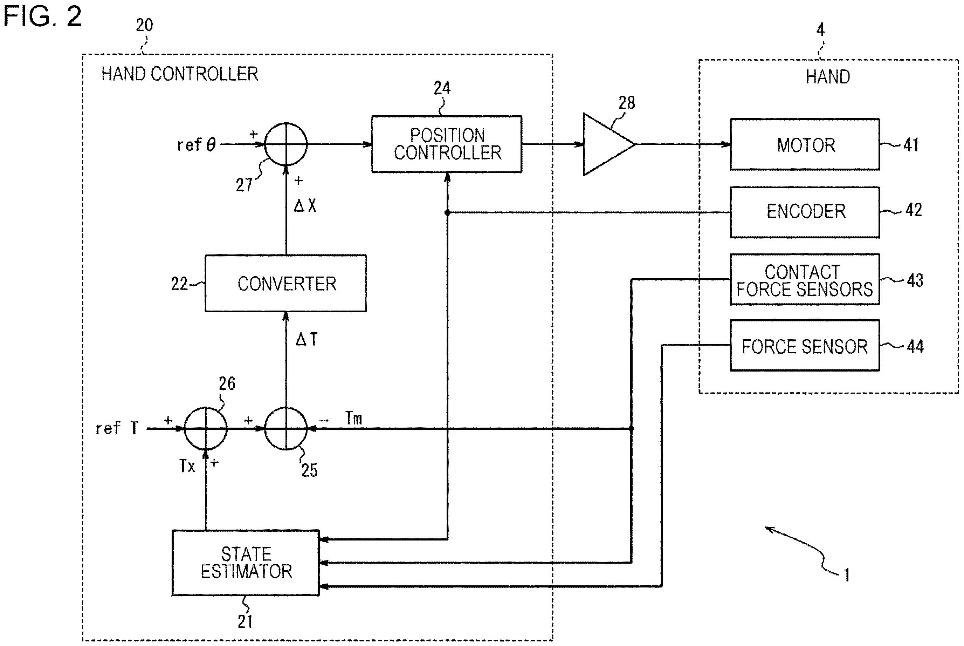

As illustrated in FIG. 2, the hand controller 20 includes a state estimator 21, a converter 22, a position controller 24, and adders 25, 26, and 27. The hand controller 20 may include at least one processor. The hand controller 20 may include a storage unit.

The robot controller 10 obtains image information from a camera or the like connected to the robot controller 10 and performs image processing or the like for controlling the arm 3 of the robot 2 or recognizing the object 8 to be grasped. The hand controller 20 controls the hand 4, for example, in such a way as to grasp the recognized object 8 to be grasped. An operation load of the robot controller 10 and an operation load of the hand controller 20 are different from each other. The robot controller 10 and the hand controller 20 may be separately provided. The robot controller 10 may be implemented as a computer installed in a body of the robot 2 or under the arm 3. The hand controller 20 may be implemented as a processor, such as a CPU, incorporated into the hand 4. The hand controller 20 may be implemented in the same manner as or similarly to the robot controller 10.

The hand 4 includes a motor 41, an encoder 42, contact force sensors 43, and a force sensor 44. The motor 41 is implemented as, for example, a servomotor such as a stepping motor and controls a rotation angle on the basis of a control signal. The encoder 42 detects the rotation angle of the motor 41 and outputs the rotation angle to the hand controller 20. The encoder 42 detects a position or an attitude, speed or acceleration, or the like of the arm 3 or the hand 4 of the robot 2. The hand 4 may further include a motion sensor. The motion sensor may be installed at one of the joints of the arm 3 of the robot 2.

The encoder 42, the contact force sensors 43, and the force sensor 44 will also be simply referred to as sensors. The hand 4 includes a plurality of sensors. The contact force sensors 43 and the force sensor 44 will be described later.

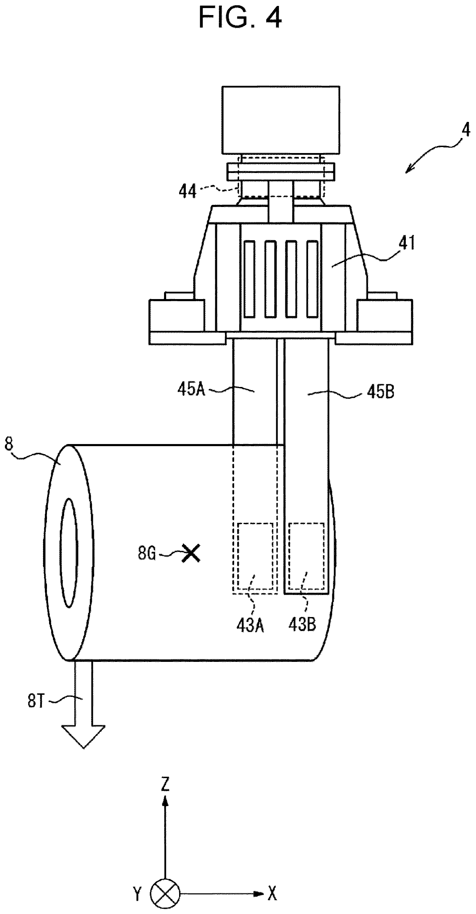

As illustrated in FIGs. 3 and 4, the hand 4 includes a plurality of fingers. In the present embodiment, the hand 4 includes, for example, two fingers 45A and 45B. The hand 4 drives the motor 41 to adjust a distance between the two fingers 45A and 45B and grasp the object 8 to be grasped with the two fingers 45A and 45B. While grasping the object 8 to be grasped, the hand 4 lifts the object 8 to be grasped in a Z-axis direction by moving the object 8 to be grasped in a positive direction of a Z-axis. In FIGs. 3 and 4, a negative direction of the Z-axis corresponds to a direction in which gravity acts on the object 8 to be grasped. The direction in which gravity acts on the object 8 to be grasped is also called a vertical direction.

The finger 45A includes a contact force sensor 43A at a part at which the finger 45A comes into contact with the object 8 to be grasped. The finger 45B includes a contact force sensor 43B at a part at which the finger 45B comes into contact with the object 8 to be grasped. That is, the contact force sensors 43 include the contact force sensors 43A and 43B. The contact force sensors 43A and 43B detect force applied from the object 8 to be grasped at a time when the fingers 45A and 45B grasp the object 8 to be grasped. The force applied to the fingers 45A and 45B from the object 8 to be grasped will also be referred to as contact force. The contact force sensors 43 may be implemented as piezoelectric sensors, strain gauges, or the like. The contact force sensors 43 may each be configured to be able to detect force in directions along a plurality of axes. The contact force sensors 43 may each include a plurality of sensors corresponding to force in the plurality of directions. Information regarding contact force may be obtained on the basis of not only results of detection by the contact force sensors 43 but also a result of detection by a current sensor that detects a current flowing to the motor for driving the robot 2.

The hand 4 includes the force sensor 44 between a base part supporting the two fingers 45A and 45B and the arm 3 of the robot 2. The force sensor 44 is capable of detecting force or torque acting on the base part through the two fingers 45A and 45B. More specifically, the force sensor 44 is capable of detecting grasping force applied to the hand 4 in an X-axis direction, a Y-axis direction, and the Z-axis direction illustrated in FIG. 3. The force sensor 44 is also capable of detecting a moment acting on the hand 4 about an X-axis, a Y-axis and the Z-axis.

In the present embodiment, for example, the two fingers 45A and 45B are assumed, in FIG. 4, to grasp the object 8 to be grasped at some position in a positive direction of the X-axis with respect to a center of gravity 8G of the object 8 to be grasped. In this case, a torque 8T about the Y-axis acts on the fingers 45A and 45B from the object 8 to be grasped. The torque 8T corresponds to a moment caused in the object 8 to be grasped since the object 8 to be grasped is grasped at a position different from the center of gravity 8G. The torque 8T acts on the base part through the two fingers 45A and 45B grasping the object 8 to be grasped. The force sensor 44 detects a torque acting on the base part through the two fingers 45A and 45B. The force sensor 44 also detects force in a negative direction of the Z-axis, that is, gravitational force acting on the object 8 to be grasped and the hand 4. The force sensor 44 may be implemented as a piezoelectric sensor, a strain gauge, or the like. The force sensor 44 may include a plurality of sensors corresponding to force or torque in a plurality of directions. The force sensor 44 may also be mounted on the arm 3 of the robot 2 or the like in addition to the hand 4.

The hand controller 20 may obtain information indicating a position of the hand 4 on the basis of information from at least one of a plurality of sensors including the encoder 42, the contact force sensors 43, the force sensor 44, or the like. The information indicating the position of the hand 4 will also be referred to as positional information regarding the hand 4. The positional information regarding the hand 4 may include information regarding a position at which the hand 4 grasps the object 8 to be grasped.

When the robot controller 10 causes the hand 4 of the robot 2 to grasp the object 8 to be grasped, the hand controller 20 may control the hand 4 in a manner that will be described hereinafter.

The hand controller 20 outputs a control signal for controlling the rotation angle of the motor 41 of the hand 4 to the motor 41 from the position controller 24. The hand controller 20 outputs the control signal through a driver 28 that amplifies the signal for the hand 4. The motor 41 controls the rotation angle on the basis of the control signal. The encoder 42 detects the rotation angle of the motor 41 and outputs the rotation angle to the position controller 24 and the state estimator 21 of the hand controller 20.

The contact force sensors 43 detect contact force at a time when the fingers 45A and 45B come into contact with the object 8 to be grasped and output the contact force to the state estimator 21 and the adder 25 of the hand controller 20. The contact force detected by the contact force sensors 43 while the hand 4 is grasping the object 8 to be grasped corresponds to grasping force acting on the object 8 to be grasped from the hand 4. Information indicating the grasping force acting on the object 8 to be grasped from the hand 4 will also be referred to as grasping force information. The hand controller 20 obtains the grasping force information from the contact force sensors 43.

The force sensor 44 detects torque acting on the fingers 45A and 45B and outputs the torque to the state estimator 21 of the hand controller 20. The torque detected by the force sensor 44 while the hand 4 is grasping the object 8 to be grasped corresponds to grasping force or a moment acting on the object 8 to be grasped in the hand 4. Information indicating the grasping force acting on the object 8 to be grasped in the hand 4 will also be referred to as grasping force information. In other words, grasping force information includes the grasping force information based on outputs of the contact force sensors 43 and the grasping force information based on an output of the force sensor 44. The grasping force information from the contact force sensors 43 is stresses applied to the fingers of the hand 4 from the object 8 to be grasped. The grasping force information from the force sensor 44 is a stress applied to the base part of the hand 4 from the object 8 to be grasped. Information indicating the moment acting on the object 8 to be grasped in the hand 4 will also be referred to as moment information. The hand controller 20 obtains the grasping force information or the moment information from the force sensor 44.

The hand controller 20 estimates, with the state estimator 21, a state in which the hand 4 is grasping the object 8 to be grasped. The state in which the hand 4 is grasping the object 8 to be grasped will also be referred to as a grasping state. More specifically, the state estimator 21 estimates the grasping state on the basis of results of detection of the rotation angle of the motor 41, the contact force, and the torque.

More specifically, a normal grasping state, a grasping correction state, an abnormal grasping state, or an ungraspable state can be estimated as the grasping state in the present embodiment. The normal grasping state corresponds to a state in which the hand 4 is normally grasping the object 8 to be grasped. The grasping correction state corresponds to a state in which a grasping mode needs to be corrected in order for the hand 4 to normally grasp the object 8 to be grasped. The abnormal grasping state corresponds to a state in which the grasping mode in which the hand 4 is grasping the object 8 to be grasped is abnormal. The ungraspable state corresponds to a state in which the hand 4 is attempting to grasp the object 8 to be grasped in a manner where the hand 4 cannot grasp the object 8 to be grasped.

The state estimator 21 may estimate the grasping state on the basis of the positional information regarding the hand 4. When the grasping force information or the moment information cannot be obtained or is smaller than a certain threshold even though the position of the hand 4 is within a certain range or the grasping position is within a tolerance of a target grasping position, for example, the state estimator 21 can estimate that the grasping state is the grasping correction state or the abnormal grasping state.

If the contact force acting on the contact force sensors 43 is smaller than a first grasping force threshold, the state estimator 21 may estimate that the grasping state is the grasping correction state. More specifically, when the contact force sensors 43 are detecting certain levels of contact force but the grasping force is smaller than the first grasping force threshold, the state estimator 21 may estimate that the grasping state is the grasping correction state. The grasping correction state includes, for example, a state in which the object 8 to be grasped slips while the hand 4 is grasping the object 8 to be grasped. In other words, the grasping correction state corresponds to a state in which the grasping force, the grasping position, or the like can be corrected such that the object 8 to be grasped will no longer slip. The first grasping force threshold may be set, for example, as a value exceeding a negative tolerance of a reference grasping force refT, which serves as a reference. The contact force can fall below the first grasping force threshold when the object 8 to be grasped slips on the finger 45A or 45B or the object 8 to be grasped is at an angle to the finger 45A or 45B. The reference grasping force refT may be defined for each of objects 8 to be grasped. The reference grasping force refT may be, for example, set by a user for each object 8 to be grasped. The reference grasping force refT may be, for example, set for each object 8 to be grasped and held in a storage unit or read from the storage unit in accordance with the object 8 to be grasped. In this case, the robot control system 1 may include an input unit that receives user inputs, such as a keyboard, a pointer, or a touch panel.

If a moment of rotation detected by the force sensor 44 while the hand 4 is grasping the object 8 to be grasped is larger than or equal to a moment threshold, the state estimator 21 may estimate that the grasping state is the grasping correction state. When a moment about the Y-axis or the moment about the X-axis becomes larger than or equal to the moment threshold, for example, the state estimator 21 may estimate that the grasping state is the grasping correction state. The moment threshold may be set, for example, on the basis of a shape or mass of the object 8 to be grasped or a level of torque assumed to be caused when the object 8 to be grasped slips in the hand 4. The user may set the moment threshold, instead. The moment threshold may be a setting value held in a storage unit in advance, instead. In this case, the robot control system 1 may include an input unit that receives user inputs, such as a keyboard, a pointer, or a touch panel. The storage unit is not limited to that in the robot controller 10 or the hand controller 20, and may be one connected to the robot controller 10 or the hand controller 20 over the network, instead.

The state estimator 21 may estimate the grasping state on the basis of force, detected by the force sensor 44, in a horizontal direction with respect to a surface of the finger 45A or 45B of the hand 4 as the grasping force information. More specifically, in the present embodiment, the state estimator 21 may estimate that the grasping state is the grasping correction state when force in the X-axis direction illustrated in FIGs. 3 and 4 is detected. The force in the X-axis direction corresponds to force in a direction in which the object 8 to be grasped slips on the finger 45A or 45B. The state estimator 21 calculates, as force of the object 8 to be grasped in the X-axis direction, a value (Fx/m) obtained by dividing the force (Fx) in the X-axis direction detected by the force sensor 44 by the mass (m) of the object 8 to be grasped. If an absolute value (|Fx/m|) of the force of the object 8 to be grasped in the X-axis direction is larger than a certain threshold, the state estimator 21 may determine that the object 8 to be grasped is slipping on the finger 45A or 45B and estimate that the grasping state is the grasping correction state. The certain threshold may be set, for example, 0.1 to 100 m/s². When the grasping state is estimated on the basis of force in an estimated direction, the product obtained from the mass of the object 8 to be grasped need not necessarily be used. When the product obtained from the mass of the object 8 to be grasped is used, on the other hand, the grasping state can be estimated while taking into consideration an effect of the mass of the object 8 to be grasped.

The state estimator 21 may estimate whether the grasping state is the grasping correction state on the basis of at least one condition. If at least one of two or more conditions is satisfied, the state estimator 21 may estimate that the grasping state is the grasping correction state. The state estimator 21 may estimate that the grasping state is the grasping correction state if two or more conditions are simultaneously satisfied.

More specifically, various states of the object 8 to be grasped can be flexibly handled using the grasping force information and the moment information. Using the grasping force information and the moment information, for example, a fall of the object 8 to be grasped can be detected on the basis of the moment information while adjusting the grasping force in such a way as to prevent the fall on the basis of the grasping force information.

Since the contact force sensors 43 and the force sensor 44 are included, various states of the object 8 to be grasped can be flexibly handled in the present embodiment. For example, a fall of the object 8 to be grasped can be detected using the force sensor 44 while adjusting the grasping force in such a way as to prevent the fall using the contact force sensors 43.

If the outputs of the contact force sensors 43 are smaller than or equal to a certain torque with which the hand 4 cannot grasp the object 8 to be grasped, or if the force sensor 44 detects a moment of rotation larger than or equal to a certain moment while the hand 4 is grasping the object 8 to be grasped, the state estimator 21 may estimate that the grasping state is the abnormal grasping state. The state estimator 21 may obtain information indicating weight of the object 8 to be grasped on the basis of information from at least one of the plurality of sensors including the encoder 42, the contact force sensors 43, the force sensor 44, or the like. The information indicating the weight of the object 8 to be grasped will also be referred to as weight information regarding the object 8 to be grasped. The state estimator 21 may estimate the grasping state on the basis of the weight information. If the weight (force in the negative direction of the Z-axis) of the object 8 to be grasped becomes smaller than or equal to a certain weight, the state estimator 21 may estimate that the grasping state is the abnormal grasping state. The abnormal grasping state corresponds, for example, to a state in which the hand 4 cannot grasp and drops the object 8 to be grasped. If a detected value of a sensor such as the contact force sensors 43 or the force sensor 44 is 0, the state estimator 21 may estimate that the hand 4 has dropped the object 8 to be grasped and that the grasping state is the abnormal grasping state.

If the grasping force information is smaller than or equal to a second grasping force threshold, the state estimator 21 may estimate that the grasping state is the abnormal grasping state. The second grasping force threshold may be set as a value smaller than the first grasping force threshold.

If the state estimator 21 continuously estimates a plurality of times that the grasping state is the abnormal grasping state, the state estimator 21 estimates that the grasping state is the ungraspable state.

If the state estimator 21 estimates that the grasping state is not the grasping correction state or the abnormal grasping state, the state estimator 21 estimates that the grasping state is the normal grasping state. When the grasping state is the normal grasping state, the hand 4 may continue the grasping operation.

As described above, the hand controller 20 estimates, with the state estimator 21 on the basis of information output from at least one of the plurality of sensors, whether the grasping state is the normal grasping state, the abnormal grasping state, or the grasping correction state. The state estimator 21 outputs a result of the estimation of the grasping state to the robot controller 10. If the state estimator 21 estimates that the grasping state is the ungraspable state, the robot controller 10 or the hand controller 20 stops the grasping operation by the hand 4. The robot controller 10 may resume the grasping operation by correcting the approach operation of the hand 4 to the object 8 to be grasped. The hand controller 20 may resume the grasping operation by correcting the grasping mode.

If estimating that the grasping state is the grasping correction state, the state estimator 21 outputs a corrected value Tx of the grasping force of the hand 4 to the adder 26 in such a way as to correct the contact force in accordance with a result of the estimation of the grasping state. If estimating that the grasping state is the grasping correction state, the state estimator 21 may set the corrected value Tx of the grasping force and output the corrected value Tx to the adder 26 in such a way as to increase the contact force acting on the object 8 to be grasped from the finger 45A or 45B of the hand 4. That is, when the grasping state is the grasping correction state, the hand controller 20 can correct, with the state estimator 21, the grasping mode of the hand 4.

The adder 26 adds the corrected value Tx of the grasping force and refT and outputs the sum to the adder 25. The adder 25 subtracts results (Tm) of detection by the contact force sensors 43 from the sum of the corrected value Tx of the grasping force and refT and outputs a difference ΔT to the converter 22. ΔT is the result of the calculation of Tx + refT - Tm and indicates an upper limit setting range of the reference grasping force refT.

If estimating that the grasping state is the grasping correction state, the state estimator 21 determines the corrected value Tx of the grasping force in such a way as to output, to the converter 22, the upper limit setting range ΔT of the reference grasping force refT or ΔTx smaller than ΔT. The converter 22 can convert the grasping force information into positional information.

If the grasping state is assumed to be the abnormal grasping state, the object 8 to be grasped is grasped in an abnormal manner or is not grasped and has been dropped. In this case, the state estimator 21 may increase the reference grasping force refT by ΔTa such that the object 8 to be grasped can be grasped in a next grasping opportunity. That is, the hand controller 20 may increase the value of the reference grasping force refT to be used by the state estimator 21 in the next grasping opportunity. ΔTa may be set as a value that satisfies ΔTx ≤ ΔTa ≤ ΔT. If the grasping state is assumed to be the ungraspable state, the robot controller 10 may change a movement path of the robot 2 and correct a grasping approach.

The converter 22 converts ΔT into ΔX and outputs ΔX to the adder 27. ΔX indicates a difference between a grasping position and a control target. The converter 22 may output ΔX to the adder 27 through a filter. The filter may include, for example, a low-pass filter that cuts off a high-frequency component for the sake of stability of a control system. The adder 27 adds ΔX and refθ and outputs the sum to the position controller 24. The sum of ΔX and refθ indicates a control target value of the rotation angle of the motor 41. The position controller 24 controls the motor 41 on the basis of a result of detection of the rotation angle of the motor 41 obtained from the encoder 42 and the control target value such that the rotation angle of the motor 41 becomes close to the control target value. refθ may be, for example, a value obtained by converting refT into a rotation angle.

As described above, in the present embodiment, the hand controller 20 is configured to be able to obtain the grasping force information acting on the object 8 to be grasped from the hand 4 and the moment information acting on the object 8 to be grasped in the hand 4 on the basis of outputs of the plurality of sensors including the encoder 42, the contact force sensors 43, the force sensor 44, or the like. The hand controller 20 estimates the grasping state in which the hand 4 is grasping the object 8 to be grasped on the basis of the grasping force information or the moment information. By operating as described above, the hand controller 20 can feed back the outputs of the sensors including the contact force sensors 43 and the force sensor 44 for the control of the motor 41. In the present embodiment, the robot controller 10 can increase stability of grasping by correcting the grasping force or the grasping approach in accordance with the grasping state. In the above example, the hand controller 20 subtracts the results (Tm) of the detection by the contact force sensors 43 from the sum of the corrected value Tx of the grasping force and refT and then converts the difference into ΔX. The hand controller 20 may convert the sum of the corrected value Tx of the grasping force and refT into ΔX and then subtract a value indicating a current position of the hand 4, that is, the result (θm) of the detection by the encoder 42, from the sum of ΔX and refθ in order to control the position.

In order for the hand to grasp an object, the hand might be controlled to grasp the object such that, for example, a relationship µFh > Fz is established between force Fz applied to the object in a gravity direction (the negative direction of the Z-axis), force Fh in a grasping direction (a normal direction of a surface of the object to be grasped), and a coefficient of friction µ between fingers of the hand and the object to be grasped obtained in advance. In this case, even if a value of Fz is larger than expected, the hand is controlled in such a way as to correct a value of Fh to a larger value and continue to grasp the object. Since such a hand controller controls the hand without changing a value of µ obtained in advance, grasping becomes unstable during control that does not take into consideration a decrease in the coefficient of friction µ due to time-related deterioration or the like. Since such a hand controller controls the hand without taking into consideration a moment of rotation although the hand controller detects the value of Fz, grasping becomes unstable during control that does not take into consideration the moment of rotation if a grasping position is not at a center of gravity of an object, because of the moment of rotation acting on the object with the grasping position as an axis. In the present embodiment, on the other hand, the robot controller 10 can control the motor 41 in consideration of torque, which increases stability of grasping.

### <Example of Flowchart>

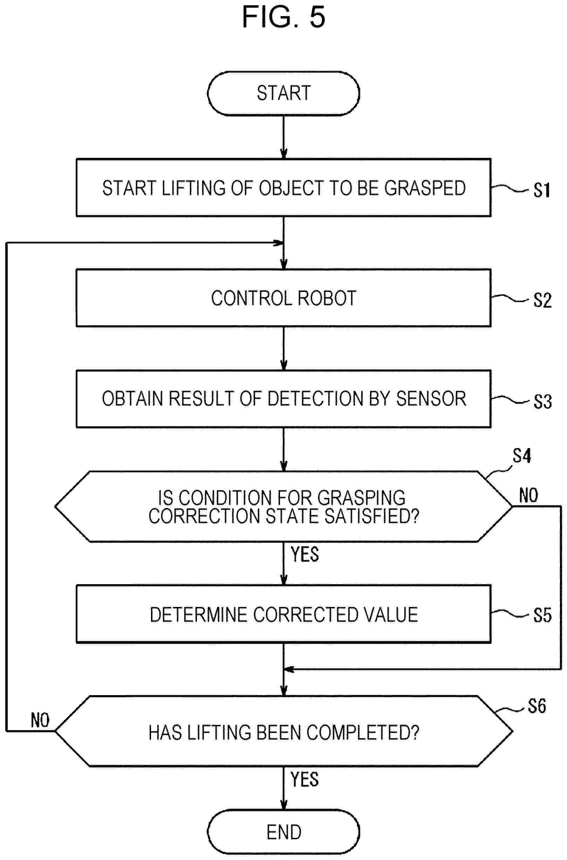

The robot controller 10 or the hand controller 20 may perform a method for controlling a robot including a procedure of a flowchart of FIG. 5, 6, or 7. The method for controlling a robot may be achieved as a program for controlling robot to be executed by a processor included in the robot controller 10 or the hand controller 20. The program for controlling a robot may be stored in a non-transitory computer-readable medium.

The robot controller 10 or the hand controller 20 may handle, by executing the procedure of the flowchart of FIG. 5, a case where the grasping state of the robot 2 is the grasping correction state.

The robot controller 10 starts lifting of the object 8 to be grasped (step S1). The robot controller 10 and the hand controller 20 control the robot 2 such that the robot 2 grasps and lifts the object 8 to be grasped (step S2). More specifically, the robot controller 10 moves the hand 4 to the object 8 to be grasped by controlling the arm 3 such that the hand 4 can grasp the object 8 to be grasped. After the hand 4 moves to the object 8 to be grasped, the hand controller 20 controls the hand 4 such that the hand 4 grasps the object 8 to be grasped. While the hand 4 is grasping the object 8 to be grasped, the robot controller 10 lifts the object 8 to be grasped by controlling the arm 3 in such a way as to raise the hand 4. After the lifted object 8 to be grasped moves to a movement target, the hand controller 20 reduces grasping force for the object 8 to be grasped to release the object 8 to be grasped from the hand 4 and put the object 8 to be grasped at the movement target.

After the hand 4 lifts the object 8 to be grasped, the hand controller 20 obtains a result of detection by a sensor such as the contact force sensors 43, the force sensor 44, or the like (step S3). The hand controller 20 determines, on the basis of the result of the detection by the sensor, whether a condition for the grasping correction state is satisfied (step S4). If a moment about the X-axis or a moment about the Y-axis detected by the force sensor 44 is larger than or equal to the moment threshold, for example, the hand controller 20 may determine that the condition for the grasping correction state is satisfied and estimate that the grasping state is the grasping correction state. If both the moment about the X-axis and the moment about the Y-axis detected by the force sensor 44 are smaller than the moment threshold, the hand controller 20 may determine whether a condition for the grasping correction state related to contact force or the like is satisfied.

If the condition for the grasping correction state is not satisfied (step S4: NO), the hand controller 20 proceeds to step S6. If the condition for the grasping correction state is satisfied (step S4: YES), the hand controller 20 determines the corrected value Tx of the grasping force (step S5).

The robot controller 10 determines whether the lifting of the object 8 to be grasped has been completed (step S6). More specifically, if the object 8 to be grasped has been lifted and put at a target position, the robot controller 10 determines that the lifting of the object 8 to be grasped has been completed. If the lifting of the object 8 to be grasped has been completed (step S6: YES), the robot controller 10 finishes executing the procedure of the flowchart of FIG. 5. If the lifting of the object 8 to be grasped has not been completed (step S6: NO), the robot controller 10 returns to the control of the robot 2 in step S2.

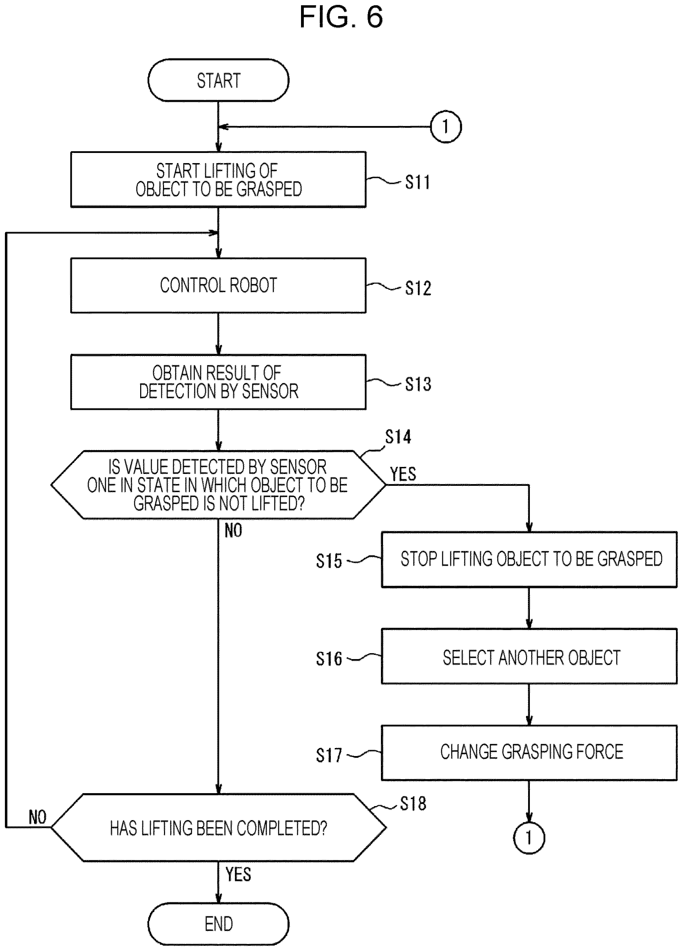

The robot controller 10 or the hand controller 20 may handle, by executing the procedure of the flowchart of FIG. 6, a case where the grasping state of the robot 2 is the abnormal grasping state.

The robot controller 10 starts lifting of the object 8 to be grasped (step S11). The robot controller 10 and the hand controller 20 control the robot 2 such that the robot 2 grasps and lifts the object 8 to be grasped (step S12). The robot controller 10 and the hand controller 20 may control the robot 2 in the same manner as or similarly to step S2 in FIG. 5.

After the hand 4 lifts the object 8 to be grasped, the hand controller 20 obtains a result of detection by a sensor such as the contact force sensors 43, the force sensor 44, or the like (step S13). The hand controller 20 determines whether a value detected by the sensor is one in a state in which the object 8 to be grasped is not lifted (step S14). In the present embodiment, for example, the value in the state in which the object 8 to be grasped is not lifted is assumed to be zero.

If the value detected by the sensor is zero (step S14: YES), the robot controller 10 estimates that the object 8 to be grasped has been dropped from the hand 4, and stops the lifting of the object 8 to be grasped (step S15). The robot controller 10 selects another object as the object 8 to be grasped (step S16). The robot controller 10 changes the grasping force for lifting the selected object 8 to be grasped (step S17). The robot controller 10 returns to the lifting of the object 8 to be grasped in step S11 so that the object 8 to be grasped selected in steps S16 and S17 will be lifted with a new grasping force.

If the value detected by the sensor is not zero (step S14: NO), the robot controller 10 estimates that the object 8 to be grasped is being grasped, continues to lift the object 8 to be grasped, and determines whether the lifting has been completed (step S18). If the lifting of the object 8 to be grasped has been completed (step S18: YES), the robot controller 10 finishes executing the procedure of the flowchart of FIG. 6. If the lifting of the object 8 to be grasped has not been completed (step S18: NO), the robot controller 10 returns to the control of the robot 2 in step S12.

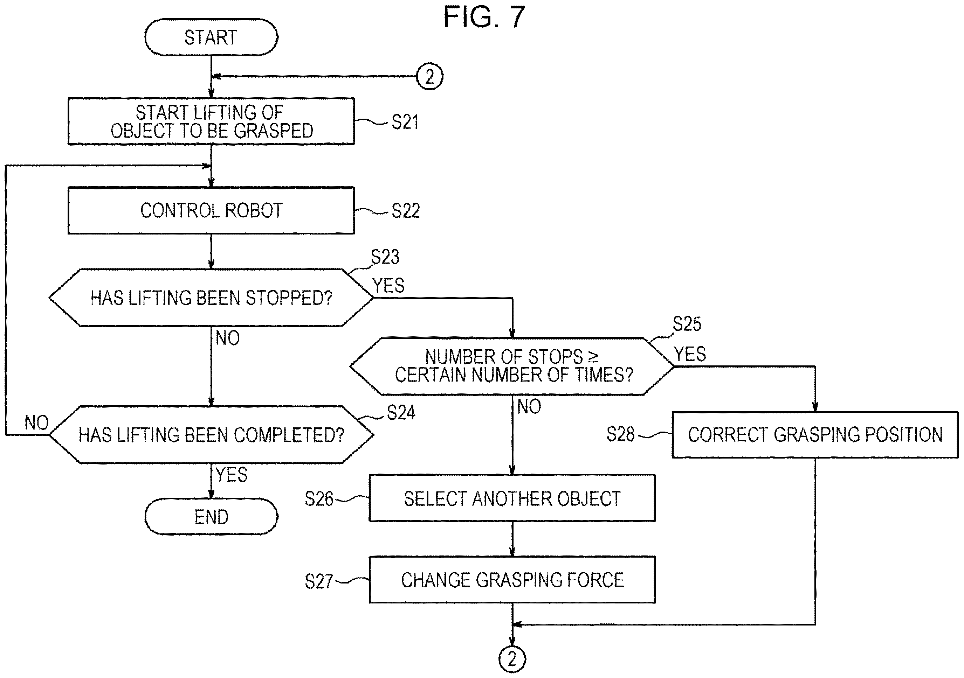

The robot controller 10 or the hand controller 20 may handle, by executing the procedure of the flowchart of FIG. 7, a case where the grasping state of the robot 2 is the ungraspable state.

The robot controller 10 starts lifting of the object 8 to be grasped (step S21). The robot controller 10 and the hand controller 20 control the robot 2 such that the robot 2 grasps and lifts the object 8 to be grasped (step S22). The robot controller 10 and the hand controller 20 may control the robot 2 in the same manner as or similarly to step S2 in FIG. 5.

The robot controller 10 determines whether the lifting of the object 8 to be grasped has been stopped in steps S13 to S15 in FIG. 6 (step S23). If the lifting of the object 8 to be grasped has not been stopped (step S23: NO), the robot controller 10 continues to lift the object 8 to be grasped and determines whether the lifting has been completed (step S24). If the lifting of the object 8 to be grasped has been completed (step S24: YES), the robot controller 10 finishes executing the procedure of the flowchart of FIG. 7. If the lifting of the object 8 to be grasped has not been completed (step S24: NO), the robot controller 10 returns to the control of the robot 2 in step S22.

If the lifting of the object 8 to be grasped has been stopped (step S23: YES), the robot controller 10 determines whether the number of stops is larger than or equal to a certain number of times (step S25). If the number of stops is not larger than or equal to the certain number of times (step S25: NO), that is, if the number of stops is smaller than the certain number of times, the robot controller 10 selects another object as the object 8 to be grasped (step S26). The robot controller 10 changes the grasping force for lifting the selected object 8 to be grasped (step S27). The robot controller 10 returns to the lifting of the object 8 to be grasped in step S21 so that the object 8 to be grasped selected in steps S26 and S27 will be lifted with a new grasping force.

If the number of stops is larger than or equal to the certain number of times (step S25: YES), the robot controller 10 corrects a position at which the object 8 to be grasped is grasped (step S28). The robot controller 10 returns to the lifting of the object 8 to be grasped in step S21 so that the object 8 to be grasped will be lifted at a new grasping position.

### (Another Embodiment)

A robot control system 1 according to another embodiment will be described hereinafter.

### <Estimation of Grasping State Based on Amount of Change in Moment or Grasping Force>

The hand controller 20 may obtain the amount of change in moment as moment information. If the amount of change in moment is larger than or equal to a first moment threshold, the hand controller 20 may estimate, with the state estimator 21, that the grasping state of the hand 4 is the grasping correction state. The hand controller 20 may correct, with the state estimator 21 the grasping force with which the hand 4 grasps the object 8 to be grasped.

If the amount of change in moment is larger than or equal to a second moment threshold, the hand controller 20 may estimate, with the state estimator 21, that the grasping state is the abnormal grasping state. The second moment threshold may be set as a value larger than the first moment threshold. The hand controller 20 may increase, with the state estimator 21 the reference grasping force refT to be used in a next grasping opportunity.

The hand controller 20 may obtain the amount of increase in the grasping force on the basis of information from at least one of a plurality of sensors. If the amount of increase in the grasping force is larger than a certain amount of increase, the hand controller 20 may estimate, with the state estimator 21, that the grasping state is the grasping correction state. The hand controller 20 may correct, with the state estimator 21, the grasping force such that the amount of increase in the grasping force becomes smaller than or equal to the certain amount of increase. In doing so, even when the object 8 to be grasped is soft, the hand 4 hardly breaks the object 8 to be grasped.

The hand controller 20 may control the hand 4 while setting an upper limit to the grasping force. In doing so, the object 8 to be grasped is hardly broken. The upper limit to the grasping force may be the sum of a minimum grasping force and an offset set in accordance with the object 8 to be grasped. The offset may be input through a user input, or may be set at a value obtained from an external environment such as a cloud computing environment. The offset may be set at a value obtained by multiplying the minimum grasping force by a certain coefficient. The certain coefficient may be set at, for example, 10% or the like.

When the object 8 to be grasped is rigid, the object 8 to be grasped is hardly broken even with a large grasping force. If estimating that the object 8 to be grasped is solid, the hand controller 20 may permit the state estimator 21 to correct the grasping force by an amount of increase in the grasping force exceeding the certain amount of increase. That is, when the object 8 to be grasped is rigid, the grasping force may be corrected to a value exceeding the upper limit. When the object 8 to be grasped is rigid, the hand controller 20 can improve operability or grasping stability of the hand 4 by permitting correction beyond the upper limit.

The hand controller 20 may recognize, on the basis of a user input, that the object 8 to be grasped is rigid. The hand controller 20 may estimate, with the state estimator 21, whether the object 8 to be grasped is rigid on the basis of a relationship between the grasping force at a time when the object 8 to be grasped is grasped and a position of the finger 45A or 45B of the hand 4. The hand controller 20 may obtain a result of the recognition, by the robot controller 10, of the object 8 to be grasped indicating that the object 8 to be grasped is rigid. A model, such as a machine learning model, or an algorithm, such as a rule-based recognition algorithm, used by the robot controller 10 to recognize the object 8 to be grasped may be configured to output a result of recognition indicating whether the object 8 to be grasped is rigid.

### <Determination of Maintenance Timing of Hand 4>

As described above, a case where the grasping state is the grasping correction state corresponds to a case where the object 8 to be grasped slips when the hand 4 grasps the object 8 to be grasped. The object 8 to be grasped becomes more likely to slip in the hand 4 due to a decrease in friction force of the finger 45A or 45B of the hand 4. In the hand 4, deterioration such as a decrease in the friction force of the finger 45A or 45B can occur. When deterioration occurs in the hand 4, the hand 4 needs to be maintained.

The robot controller 10 may determine maintenance timing of the hand 4 on the basis of a result of estimation of the grasping state of the hand 4. If a ratio of the number of times that the grasping state of the hand 4 becomes the normal grasping state to the number of times that the hand 4 attempts to grasp the object 8 to be grasped becomes lower than a certain ratio, for example, the robot controller 10 may determine that the hand 4 needs to be maintained.

Although the robot control systems 1 according to some embodiments have been described, embodiments of the present disclosure may include a mode where a method or a program for achieving a system or an apparatus or a storage medium (e.g., an optical disc, a magneto-optical disk, a CD-ROM, CD-R, a CD-RW, a magnetic tape, a hard disk, a memory card, etc.) storing the program is employed. The program may be stored in a non-transitory computer-readable medium.

A mode in which the program is provided is not limited to an application program such as an object code complied by a compiler or a program code executed by an interpreter, and may be a mode such as a program module incorporated into an operating system. The program may or may not be configured such that a CPU on a control substrate performs all processing. The program may be configured such that another processing unit provided for an expansion board or an expansion unit added to a board performs a part or the entirety thereof.

Although some embodiments of the present disclosure have been described on the basis of the drawings and the examples, note that those skilled in the art can make various variations or alterations on the basis of the present disclosure. Note, therefore, that the scope of the present disclosure includes such variations and alterations. For example, functions included in various components can be rearranged without causing a logical contradiction. A plurality of components can be combined together or further divided.

In the present disclosure, the X-axis, the Y-axis, and the Z-axis are provided for convenience of description, and may be switched. The components in the present disclosure have been described using an orthogonal coordinate system defined by the X-axis, the Y-axis, and the Z-axis. Positional relationships between the components in the present disclosure are not limited to orthogonal relationships.

### REFERENCE SIGNS

1 robot control system
2 robot (3: arm)
4 hand (41: motor, 42: encoder, 43 (43A, 43B): contact force sensors, 44: force sensor, 45A, 45B: finger)
8 object to be grasped (8G: center of gravity)
10 robot controller
20 hand controller (21: state estimator, 22: converter, 24: position controller, 25 to
27: adders)
28 driver

## Claims

1. A control apparatus comprising:
a hand controller that controls a hand capable of grasping an object to be grasped and including a plurality of sensors,
wherein the hand controller is configured to be able to obtain information regarding grasping force acting on the object to be grasped from the hand or information regarding a moment acting on the object to be grasped in the hand, the information regarding the grasping force and the information regarding the moment being based on outputs of the plurality of sensors, and
wherein the hand controller estimates, on a basis of the information regarding the grasping force or the information regarding the moment, a grasping state in which the hand is grasping the object to be grasped.

2. The control apparatus according to claim 1,
wherein the hand controller estimates, on a basis of information from at least one of the plurality of sensors, whether the grasping state is a normal grasping state, an abnormal grasping state, or a grasping correction state, in which a grasping mode needs to be corrected, and
wherein, when the grasping state is the grasping correction state, the hand controller corrects the grasping mode of the hand.

3. The control apparatus according to claim 1 or 2,
wherein the hand controller obtains, on a basis of information from at least one of the plurality of sensors, weight information regarding the object to be grasped, and
wherein the hand controller estimates the grasping state on a basis of the weight information.

4. The control apparatus according to claim 3,
wherein, when the weight information is smaller than or equal to a certain weight, the hand controller estimates that the grasping state is the abnormal grasping state, and
wherein the hand controller increases a value of reference grasping force to be used in a next grasping opportunity.

5. The control apparatus according to any of claims 1 to 4,
wherein the hand controller obtains positional information regarding the hand on a basis of information from at least one of the plurality of sensors, and
wherein the hand controller estimates the grasping state on a basis of the positional information regarding the hand.

6. The control apparatus according to claim 5,
wherein, when a position of the hand indicated by the positional information regarding the hand is within a certain range and the information regarding the grasping force is smaller than or equal to a first grasping force threshold, the hand controller estimates that the grasping state of the hand is the grasping correction state, and
wherein the hand controller corrects grasping force for the hand to grasp the object to be grasped.

7. The control apparatus according to any of claims 1 to 6,
wherein, when the information regarding the moment indicates an amount of change in moment and the amount of change is larger than or equal to a first moment threshold, the hand controller estimates that the grasping state of the hand is the grasping correction state, and
wherein the hand controller corrects grasping force for the hand to grasp the object to be grasped.

8. The control apparatus according to claim 7,
wherein, when the information regarding the moment is the amount of change in moment and the amount of change is larger than or equal to a second moment threshold larger than the first moment threshold, the hand controller estimates that the grasping state is the abnormal grasping state, and
wherein the hand controller increases reference grasping force to be used in a next grasping opportunity.

9. The control apparatus according to any of claims 1 to 8,
wherein, when the information regarding the grasping force is smaller than or equal to a second grasping force threshold smaller than a first grasping force threshold, the hand controller estimates that the grasping state is the abnormal grasping state, and
wherein the hand controller increases reference grasping force to be used in a next grasping opportunity.

10. The control apparatus according to any of claims 1 to 9,
wherein the hand controller corrects, on a basis of information from at least one of the plurality of sensors, grasping force such that an amount of increase in the grasping force becomes smaller than or equal to a certain amount of increase.

11. The control apparatus according to claim 10,
wherein the hand controller permits, on a basis of the information from the at least one of the plurality of sensors, correction of the grasping force with an amount of increase in the grasping force exceeding the certain amount of increase.

12. The control apparatus according to any of claims 1 to 11,
wherein, when the hand controller continuously estimates a plurality of times that the grasping state of the hand is the abnormal grasping state, the hand controller estimates that the grasping state of the hand is an ungraspable state, and
wherein the hand controller stops a grasping operation performed by the hand.

13. The control apparatus according to any of claims 1 to 12,
wherein the hand controller obtains, as the information regarding the grasping force, force acting in a horizontal direction with respect to a surface of a finger included in the hand and estimates the grasping state on a basis of the force.

14. The control apparatus according to any of claims 1 to 13, further comprising:
a robot controller that controls an approach operation of the hand to the object to be grasped,
wherein, when the hand controller estimates that the grasping state of the hand is an ungraspable state, the robot controller corrects the approach operation of the hand.

15. The control apparatus according to claim 14,
wherein the robot controller determines maintenance timing of the hand on a basis of a result of the estimation of the grasping state of the hand.

16. A robot control system comprising:
the control apparatus according to any of claims 1 to 15; and
a robot including a hand.

17. A method for controlling a robot, the method comprising:
obtaining information regarding grasping force acting on an object to be grasped from a hand or information regarding a moment acting on the object to be grasped in the hand; and
estimating, on a basis of the information regarding the grasping force or the information regarding the moment, a grasping state in which the hand is grasping the object to be grasped.
